Europäisches Patentamt

European Patent Office

Office européen des brevets

(11) Veröffentlichungsnummer: **0 419 785 A2**

# EUROPÄISCHE PATENTANMELDUNG

(21) Anmeldenummer: **90113756.2**

(51) Int. Cl.⁵: **C04B 28/02**

(22) Anmeldetag: **18.07.90**

(30) Priorität: 08.08.89 DE 3926123
09.02.90 DE 4003961
07.10.89 DE 3933615

(43) Veröffentlichungstag der Anmeldung:
**03.04.91 Patentblatt 91/14**

(84) Benannte Vertragsstaaten:
**AT BE CH DE DK ES FR GB GR IT LI LU NL SE**

(71) Anmelder: **Kesting, Lorenz**
**Holzheck 21**
**W-4600 Dortmund-Eving(DE)**

(72) Erfinder: **Kesting, Lorenz**
**Holzheck 21**
**W-4600 Dortmund-Eving(DE)**

(74) Vertreter: **Herrmann-Trentepohl, Werner,**
**Dipl.-Ing. et al**
**Schaeferstrasse 18**
**W-4690 Herne 1(DE)**

(54) **Polystyrolbeton für Betonfertigteile.**

(57) Bei einem Polystyrolbeton für Betonfertigteile, welche außer Zement und Zuschlag zur Gewichtsersparnis ein Granulat aus aufgeschäumtem Polystyrol enthalten, wird erfindungsgemäß vorgeschlagen, dem Styroporbeton in der Ausgangsmischung zur Rißbegrenzung bei der Herstellung von Betonfertigteilen alkalische textile Fasern beizumischen.

FIG.1

Die Erfindung betrifft Polystyrolbeton für Betonfertigteile gemäß dem Oberbegriff des Anspruches 1.

Die Erfindung bezieht sich auf die Herstellung von Elementen vorzugsweise des Hochbaus, die in Fertigteilewerken hergestellt und an einer Baustelle eingebaut oder aufgestellt werden. Diese Fertigteile müssen einerseits in der Lage sein, u.U. erhebliche Kräfte abzutragen, die sich aus dem Bauwerk und gegebenenfalls auch schon beim Transport und bei der Aufstellung bzw. dem Einbau des Fertigteiles ergeben. Andererseits sollen Fertigteile aus Beton wegen der Erleichterung des Transportes leicht sein, müssen jedoch die geforderten bauphysikalischen Eigenschaften mitbringen.

Es ist daher bereits ein Polystyrolbeton als Leichtbeton vorgeschlagen worden (DE-A-23 51 469), der außer Zement und Zuschlag zur Gewichtsersparnis ein Granulat aus aufgeschäumtem Polystyrol enthält, wobei der Beton im W-Verfahren hergestellt wurde, künstlich leichte Zuschlagstoffe enthält und auch in dem Zementmörtel stabilisierte Luftporen erzeugt sind, welche die Form von Polystyrol-Kügelchen vergleichsweise kleiner Korngröße und Kornspanne haben. Ein derartiger Polystyrolbeton hat im Gegensatz zu Leichtbetonen, welche stark herabgesetzte Rohdichten aufweisen und dementsprechende günstige wärmedämmende Eigenschaften besitzen, trotz seines geringen Gewichts eine erhebliche Festigkeit. Er bedarf dazu keines Stützgerüstes aus Normalbeton oder Stahl. Er wird daher im Gegensatz zu den Polystyrolbetonen mit geringerer Festigkeit als konstruktiver Leichtbeton bezeichnet.

Die Erfindung betrifft einen derartigen konstruktiven Polystyrolbeton. Der vorbekannte konstruktive Polystyrolbeton hat indessen den Nachteil, daß er Risse bildet. Seine Anwendung ist daher auf Konstruktionen beschränkt, welche entweder keine Bewehrung aus Stahl erhalten oder eine Stahlbewehrung voraussetzen, die gegen das durch die Risse eindringende Wasser und die von ihm erzeugten Korrosionen besonders geschützt ist, aber in der Regel aus Kostengründen nicht in Betracht kommt.

Der Erfindung liegt die Aufgabe zugrunde, einen konstruktiven Polystyrolbeton zu schaffen, welcher Betonfertigteile ermöglicht, die gegenüber den aus Beton ohne Zuschläge aus Polystyrolgranulat hergestellten Fertigteilen leichter sind und verbesserte bauphysikalische Eigenschaften aufweisen, jedoch andererseits keiner Beschränkung in Bezug auf eine im Einzelfall notwendige Bewehrung unterliegen.

Diese Aufgabe löst die Erfindung mit den Merkmalen des Anspruches 1. Weitere Merkmale der Erfindung sind Gegenstand der Unteransprüche.

Es hat sich überraschend herausgestellt, daß durch die erfindungsgemäße Zumischung von alkalischen Textilfasern zu der Ausgangsmischung des Betons ohne merkliche Gewichtsvermehrung erhebliche Granulatmengen aus aufgeschäumtem Polystyrol als Leichtzuschlag zu dem Beton untergebracht werden können, ohne daß in dem späteren Fertigteil Risse entstehen, selbst wenn ein solches Fertigteil einen größeren Hohlkörper, z.B. eine Raumzelle bildet, die besonders während des Transportes und ihrer Aufstellung auf der Baustelle auch dynamischen Beanspruchungen ausgesetzt ist.

Die Verarbeitung eines derartigen Polystyrolbetons ist infolge seiner geringen Rohdichte vergleichsweise schwierig, weil der neue Beton sich nicht oder nur schwer rütteln läßt, um Entmischungen vorzubeugen. Es hat sich jedoch gezeigt, daß bestimmte Hilfsmittel, welche man normalerweise zur Verbesserung des Fließverhaltens von Beton etwa in Betonpumpen und Betonförderleitungen einsetzt, eine Grundlage für eine Verbesserung der Verarbeitbarkeit des neuen Polystyrolbetons bilden können, was allerdings besondere Maßnahmen voraussetzt, die Gegenstand des Anspruches 2 sind. Zu den angesprochenen Agenzien gehören z.B. Granulate, die unter dem Handelsnamen Tricosal (Warenzeichen, Chemische Fabrik Grünau GmbH, Tricosal S 55 ist beispielsweise ein Protein-Schaumbildner-Konzentrat zur mechanischen Herstellung von Luftschäumen auf Basis eines Proteinhydrolysats) verfügbar sind und die bislang im flüssigen Zustand der Mischung zugesetzt werden müssen. Das hat sich jedoch in dem erfindungsgemäßen Polystyrolbeton als wirkungslos erwiesen. Wenn man jedoch mit an sich bekannten Mitteln die aus dem Ausgangsrohstoff, welcher normalerweise als Granulat angeliefert wird, hergestellte Flüssigkeit aufschäumt, was durch den Zusatz von erheblichen Druckluftmengen in den Vorrichtungen erfolgen kann, ergeben sich überraschenderweise geschmeidige Betonoberflächen und herabgesetzte Viskositäten, welche das Füllen der Schalungen im Fertigteilewerk auch dann ermöglichen, wenn diese komplizierte Bewehrungen oder nur geringe Zwischenräume enthalten.

Üblicherweise verwendet man neben dem Polystyrolgranulat in konstruktivem Leichtbeton Leichtzuschläge etwa in Form von Blähtonsand (bis 2 mm Korngröße) oder Blähtonpartikel größerer Abmessungen. Diese Zuschläge können auch in dem erfindungsgemäßen Polystyrolbeton benutzt werden, wobei außerdem Leichtzuschläge anderer stofflicher Zusammensetzung in Betracht kommen, etwa in Form von Flugaschen aus Steinkohlenkraftwerken. Es ist jedoch aus Kosten- und Verfügbarkeitsgründen erwünscht, gewöhnliche Zuschläge, etwa Rheinsand zu verwenden, wobei die Art und nicht die Herkunft des Sandes entscheidend ist.

Eine geeignete Mischung dieser Art ergibt sich aus dem Anspruch 3. Der Polystyrolbeton hat dann eine Rohdichte von ca. 600 kg/m$^3$ und erreicht damit eine Innenfestigkeit von 12 bis 18 M/mm$^2$. Wenn dabei das Fließverhalten des Betons verbessert ist, bedarf der neue Polystyrolbeton eines Schaumzusatzes nach Anspruch 4.

Die textilen, alkalischen Fasern, welche erfindungsgemäß den neuen Polystyrolbeton erst für die Technologie der Betonfertigteile verwendbar machen, haben zweckmäßig die Merkmale des Anspruches 5. Ihr Gewichtsanteil spielt in dem Beton keine entscheidende Rolle, jedoch vermeidet ihre Verwendung in dem erhärteten Fertigteile jegliche Restbildung.

Es hat sich ferner herausgestellt, daß die konstruktiven Eigenschaften des neuen Polystyrolbetons so außergewöhnlich sind, daß sie mit den Raumzellen produziert werden können, die sich für die Raumzellenbauweise eignen, mit der Raumzellen gemäß der Grundrißlösung des Gebäudes montiert werden, sich aber auch einzeln aufstellen lassen. In diesem Zusammenhang betrifft die Erfindung insbesondere Wohncontainer gemäß dem Oberbegriff des Anspruches 6. Diese neuen Raumzellen lassen sich in Einzelaufstellungen als gewerbliche oder Wohnzwecken dienende Bauten ausführen. Hierbei bilden die Ausfachungen des Stahlgerätes die Wände und den Boden des Gebäudes, der gegen den Baugrund isoliert ist. Solche Raumzellen werden insbesondere als Wohncontainer verwendet, die bereits in der Fabrik fertiggestellt, sowie gegebenenfalls mit Teilen ihrer Inneneinrichtung versehen an den Aufstellungsort transportiert werden. Der Aufbau dieser neuen Raumzellen aus Polystyrolbeton und einem Stahlskelett bezweckt weitere Gewichtseinsparungen, um verhältnismäßig große Rauminhalte mit den üblichen Transportmitteln und Hebezeugen bewältigen zu können. Die Ausfachungen dieses im allgemeinen mit einem rechteckigen Grundriß versehenen Skeletts lassen Außenwände zu, welche ein erträgliches Wohnklima gewährleisten und das Gebäude trocken halten, sowie gegen Kälte isolieren.

Die Erfindung geht insoweit von einer vorbekannten Raumzelle aus (DE-PS 29 07 630). Hierbei sind die Rahmenfelder mit Metallpaneelen ausgefacht und an einer Stirnwand mit Diagonalverstrebungen ausgesteift. Nur an dieser Stirnwand ist es möglich, eine Ausfachung aus nichttragenden Paneelen vorzusehen. Das erst durch die Metallpaneele und die Diagonalverspannungen selbsttragend gemachte Stahlskelett kann Eckstützen und Rahmenglieder aus kalt umgeformten Profilen verwenden, die infolge der Verbundwirkung mit den beschriebenen Ausfachungen und Diagonalverstrebungen eine hinreichende Steifigkeit der Gesamtkonstruktion ergeben. Dabei ist es allerdings erforderlich, die oberen Enden der Eckstützen an den Stirnseiten der Rahmenkonstruktion jeweils mit einem schweren Querträger zu verbinden. Aus dieser derart selbsttragend gemachten Stahlskelettkonstruktion ergibt sich allerdings ein sehr hohes Gesamtgewicht, das für die Mobilität der Raumzelle ungünstig ist.

Außerdem müssen die Außenseiten der mit den Metallprofilen ausgefachten Rahmenfelder besonders behandelt, z.B. verputzt werden. An den Innenseiten der ausgefachten Rahmenfelder muß eine wärmedämmende Schicht angeordnet werden. Daraus ergibt sich eine Vielzahl von Arbeiten, wodurch die Raumzelle besonders aufwendig wird. Ausfachungen mit nichttragenden Paneelen sind demgegenüber wesentlich günstiger, weil die Paneele in einem Arbeitsgang montiert werden können. Schließlich leidet auch das Wohnklima durch die notwendigen und innen angeordneten, aus Kunststoff bestehenden Paneele. Auf ihren Oberflächen kondensiert die Feuchtigkeit, was besonders bei Wohncontainern ungünstig ist und praktisch die Verwendung als Sanitär- oder Waschräume ausschließt.

Gemäß der Erfindung wird eine Raumzelle der vorstehend beschriebenen Art geschaffen, welche die für eine Langzeitbewohnung erforderlichen Eigenschaften eines mobilen Gebäudes erhalten kann und eine hohe Wertbeständigkeit aufweist. Dies wird erfindungsgemäß mit den Merkmalen des Ansprüches 6 erreicht. Gemäß der Erfindung ergibt sich aus der ausschließlichen Verwendung von kalt umgeformten Profilen ein selbsttragendes Stahlskelett mit geringem Gewicht, das aufgrund seiner selbsttragenden Eigenschaften die Möglichkeit bietet, die Ausfachungen ausschließlich mit dem neuen Polystyrolbeton vorzunehmen. Hierbei wird das Ausklinken der geflanschten Blechprofile mit dem erfindungsgemäßen Polystyrolbeton vermieden, der die Knickkraft abträgt und aufgrund seiner hohen Festigkeiten dazu auch in der Lage ist, nach seinem Erhärten jedoch glatte Oberflächen bildet, die keiner oder keiner wesentlichen weiteren Behandlung bedürfen. Die Ausfachungen haben daher ebenfalls ein geringes Gewicht, jedoch eine hohe Wärmedämmung. Hieraus ergeben sich günstige Eigenschaften, nämlich ein insgesamt leichtes Gewicht, eine hohe Wärmedämmung, eine geringe Feuchtigkeitsaufnahme, eine hohe Feuerbeständigkeit, die Möglichkeit einer holzähnlichen Bearbeitung, ein angenehmes Raumklima und weitere Möglichkeiten, z.B. Wohncontainer sofort bewohnbar zu machen und gegebenenfalls mit einer Fußbodenheizung zu versehen. Derartige Wohncontainer können als Wohnräume, Sanitäts- und Waschräume, Aufenthalts- und Umkleideräume, Verkaufsräume, Büro- und Messeräume, Übergangswohnheime, Studentenwohnheime und ähnliche Zwecke eingesetzt werden, ohne daß sie von den Benutzern beanstandet werden.

Die selbsttragenden Eigenschaften des Stahlskeletts in Verbindung mit nichttragenden Ausfachungen ermöglichen es, einzelne Rahmenfelder freizulassen und aus mehreren, nebeneinander angeordneten Raumzellen gemäß der Erfindung größere Räume herzustellen. Dadurch ergibt sich die Möglichkeit von Grundrißlösungen, die einem größeren Gebäude entsprechen. Hierbei verbleiben die Stahlskelette in ihrem selbsttragenden Zustand und in ihrer Mobilität. Deshalb kann aus den die Stahlskelette enthaltenen Elementen schnell errichteter Wohnsiedlungen dann, wenn diese nicht mehr gebraucht werden, ein größeres und aufwendigeres Gebäude errichtet werden, etwa ein Wohnbungalow oder eine Reihenhaussiedlung.

Da gemäß der Erfindung die Profile so angeordnet sind, daß sie hinter den Ausfachungen verschwinden, beeinträchtigen sie das äußere Aussehen und damit den Wert solcher Gebäude nicht. Darüberhinaus ergibt sich aus dieser Anordnung die hohe Feuerbeständigkeit des Gebäudes.

Der Anspruch 7 beschreibt eine zweckmäßige Bauart bei Verwendung des neuen Polystyrolbetons für eine derartige Raumzelle. Hierbei sind die Stiele infolge ihrer einseitigen Einbettung in den Polystyrolbeton zuverlässig gegen Ausknicken geschützt, während die Rahmenglieder gleichzeitig die Anschlüsse der von den Rahmen gebildeten Tafeln an die Bodenscheibe bzw. an die Decke bilden.

Die Decke wird indessen zweckmäßig nicht aus einer Rahmenkonstruktion, sondern mit den Merkmalen des Anspruches 8 verwirklicht. Hierbei ergibt sich ein hohes Wärmedämmvermögen in Verbindung mit verbesserten statischen Eigenschaften durch die Verwendung eines Verbundes aus Stahlpaneelen mit dem Polyurethanschaum. Solche Decken lassen sich in üblicher Weise verwahren, indem sie eine Dachhaut erhalten und gegebenenfalls beschwert werden.

Für kleinere Formate von Raumzellen, etwa für Stahlbetonfertiggaragen eignet sich der erfindungsgemäße Polystyrolbeton ebenfalls. Diese Raumzellen werden vorzugsweise mit den Merkmalen des Anspruches 9 verwirklicht, wodurch sich zwischen den Trä gern erhebliche Spannweiten ergeben, ohne daß in diesen Zwischenräumen eine Bewehrung erforderlich ist. Gewölbedecken dieser Art sind leicht und wenden vorzugsweise Profile an, die im Anspruch 9 wiedergegeben sind. Aus Festigkeitsgründen kann bei derartigen Raumzellen ein verstärkter Boden erforderlich werden, der Gegenstand des Anspruches 10 ist. Für Wohnzwecke eignen sich dagegen Raumzellen mit den Merkmalen des Anspruches 11.

Mit den Merkmalen des Anspruches 12 wird der erfindungsgemäße Polystyrolbeton für ein weiteres Betonfertigteil verwendet, das bisher nur aus Schwerbeton hergestellt werden konnte. Hierbei handelt sich sich um einen großformatigen Mauerstein, der zum Rationalisieren des Mauerns bei der Errichtung von gewerblichen und privaten Bauten, d.h. in Wohnhäusern, Hallen o.dgl. zur Errichtung der Umfassungsmauern eingesetzt werden kann. Seine Höhe wird in der Regel in einer Größenordnung gewählt, die ausreicht, mit z.B. vier Lagen die üblichen Raumhöhen von Wohnhäusern zu bewältigen. Bei der Fugenhöhe von ca. 10 mm können deswegen Mauersteinhöhen von ca. 64 cm gewählt werden. Die Länge dieser Mauersteine sollte unter Verwendung einer Fugenbreite von ebenfalls ca. 10 mm im allgemeinen 99 cm betragen, um die unterschiedlichen Raumlängen und -breiten zu bewältigen.

Die bekannten Mauersteine dieser Art weisen in der Regel Aussparungen auf, welche mit Luft gefüllt sind, so daß es sich um Hohlblocksteine handelt. Nachteilig ist jedoch in erster Linie das hohe Gewicht dieser großformatigen Hohlblocksteine bei den geforderten Abmessungen. Deswegen setzt das Vermauern Hebezeuge oder daraus entwickelte Mauervorrich tungen voraus, welche den betreffenden großformatigen Mauerstein anheben, ihn auf die zuvor gemörtelte horizontale Fuge aufsetzen und schließlich freigeben, nachdem er seine richtige Stellung eingenommen hat. Der Einsatz derartiger Hilfsmittel bedingt Arbeitsvorgänge, die die Zeit des eigentlichen Mauerns reduzieren. Außerdem belasten die Geräte die Gebäudedecken und sind häufig nur mit Schwierigkeiten von einem Raum in den anderen umzusetzen, wenn die Öffnungen in den Trennwänden normale Abmessungen aufweisen.

Ein anderer, wesentlicher Nachteil vorbekannter großformtiger Mauersteine aus Beton ist ihr geringes Wärmedämmvermögen. Dadurch werden im allgemeinen besonders ausgebildete Fassaden erforderlich, um die Wärmedämmung der Umfassungsmauern zu verbessern, weil die Aussparungen in den Hohlblocksteinen hierfür nicht mehr ausreichen.

Gemäß der Erfindung wird ein rationelles Vermauern gewährleistet und eine praktische Mauerausbildung in einem Gebäude ermöglicht, was mit Hilfe der Merkmale des Anspruches 12 erfolgt. Hierbei reicht die Faserbewehrung des erfindungsgemäßen Polystyrolbetons aus, um die erforderlichen Festigkeiten in der Größenordnung von 4 kn/mm² zu erreichen. Die erfindungsgemäßen großformatigen Mauersteine sind dann mehr als um die Hälfte leichter als die bekannten Mauersteine aus Schwerbeton. Sie lassen sich daher ohne Hebezeuge und ähnliche Vorrichtungen vermauern. Das ergibt wesentlich höhere Wärmedämmwerte als bisher. Da keine Hohlräume in den neuen Mauersteinen enthalten sind, hängt ihre Dicke nur von ihrer Festigkeit ab. Im allgemeinen genügen einfache Verputze oder Anstriche bei der Ausbildung der Fassade.

In diesen und in anderen Anwendungsfällen des erfindungsgemäßen Polystyrolbetons ergeben sich Trockendichten zwischen 1.200 bis 1.300 kg/m³. Die Festigkeiten, die nach sieben Tagen erreicht werden, liegen in der Größenordnung von 17 N/mm².

Die Einzelheiten, weiteren Merkmale und andere Vorteile der Erfindung ergeben sich aus der nachfolgenden Beschreibung von Ausführungsbeispielen der Erfindung; es zeigen

Fig. 1 bis Fig. 7
die Anwendung des erfindungsgemäßen Polystyrolbetons auf großformatige Raumzellen, die als Wohncontainer Verwendung finden,
Fig. 8 bis Fig. 11
eine demgegenüber abgeänderte Ausführungsform der Erfindung und

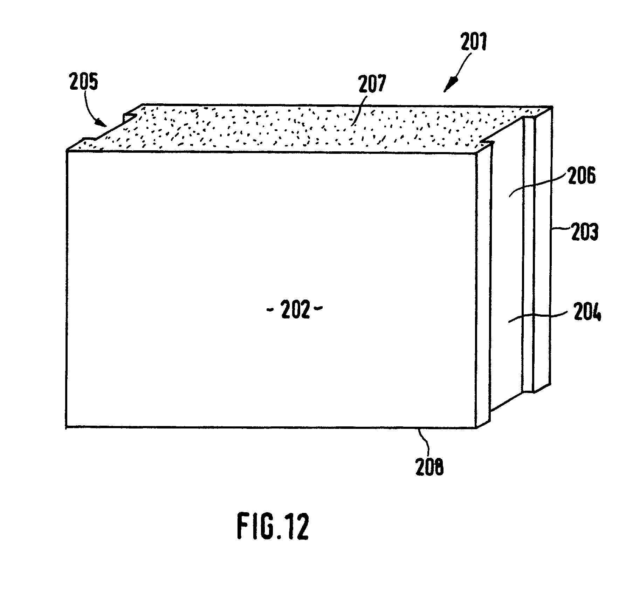

Fig. 12 die Anwendung des erfindungsgemäßen Polystyrolbetons auf einen großformatigen Mauerstein.

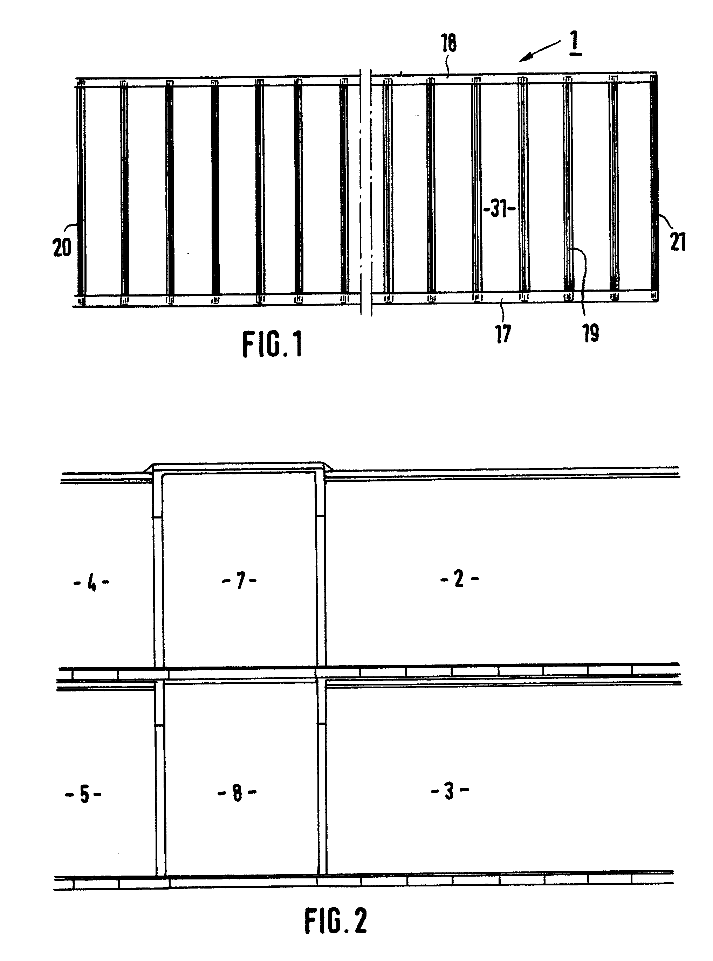

In Fig. 1 ist das Stahlskelett (1) des Bodens einer Raumzelle (2) wiedergegeben, welche zusammen mit weiteren Raumzellen (3, 4 und 5) ein zweigeschossiges Gebäude bildet, das im senkrechten Schnitt und abgebrochen in Fig. 2 wiedergegeben ist. Die Raumzellen sind dabei in zwei Gebäudeflügeln (5 bzw. 6) angeordnet, die durch übereinanderliegende Gänge (7 bzw. 8) verbunden sind. Nicht dargestellte Öffnungen in den Wandscheiben der Raumzellen stel len die nötigen Verbindungen im Gebäude her und dienen auch als Fenster- und Türöffnung.

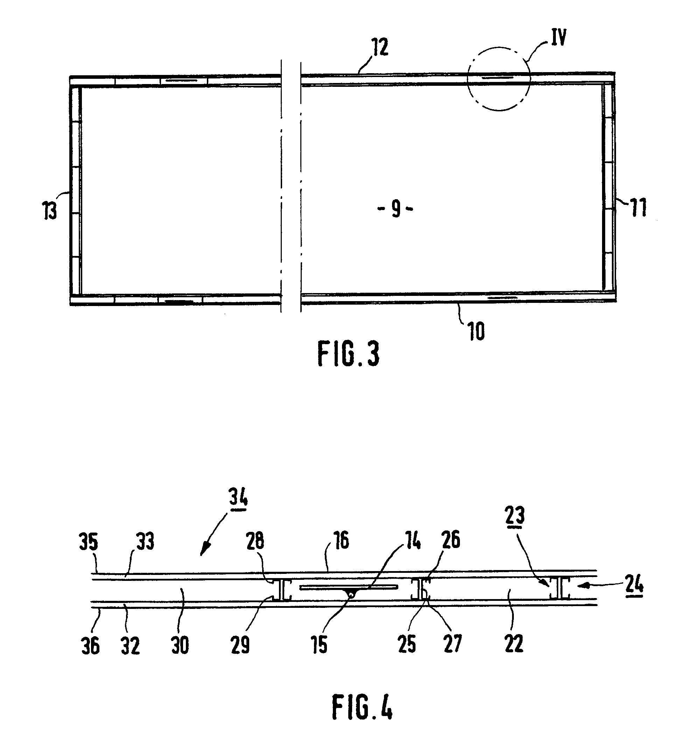

Die Fig. 3 zeigt eine Draufsicht auf eine der Raumzellen (2-4) nach Fig. 2. Sie läßt erkennen, daß auf dem Boden (9) der Raumzelle die vier senkrechten Wandscheiben (10-13) aufgebaut sind. Der Raumzellengrundriß ist rechteckig, wobei die Längswände (10, 12) der bis zu 10 m langen Raumzelle, die als Ganzes auf einen Tieflader transportiert werden kann, parallel sind und senkrecht zu den Querwänden (11, 13) verlaufen. Der Aufbau der Wände und des Bodens (9) ist in allen Scheiben der Raumzelle im wesentlichen der gleiche. Aus der in Fig. 4 wiedergegebenen Einzelheit, die mit IV in Fig. 3 bezeichnet ist, ergibt sich, daß jedenfalls die Längswandscheiben (10, 12) mit Zugleitern (14) versehen sind, welche paarweise in den Tafeln angeordnet sind, welche die Wandscheiben bilden. Diese Zuganker enthalten jeweils eine Zugstange (15) mit Verankerungen (16), die im Polystyrolbeton untergebracht sind. Die Zugstangen weisen an ihren Enden nicht dargestellte Haken auf, mit denen sie an das Geschirr eines Hebezeuges, z.B. eines Krans angeschlossen werden können.

Wie sich aus der Fig. 1 ergibt, bestehen die Rahmenlängsglieder (17, 18) aus U-Profilen (19) (Fig. 4). In diese passen die Enden von Querglieder (19) des Bodenrahmens (1). Die außen liegenden Querglieder (20, 21) sind mit den Längsrahmengliedern (17, 18) zu einem biegesteifen Rahmen verbunden. Dazu eignen sich Schweißverbindungen in Form von Kehlnähten.

Die Querglieder (19-21), welche in den senkrechten Wandscheiben (10) Stützen bilden, sind wie die Querglieder (19-21) des Bodenrahmens (1) profiliert. Es handelt sich hierbei um paarweise zusammengestellte Profile (23, 24) aus umgeformten Blechstreifen. Diese besitzen die aus Fig. 4 ersichtliche C-Form. Sie weisen dementsprechend außer einem geraden Profilsteg (25) und parallelen, ebenfalls geraden Flanschen (26, 27) nach innen weisende Profilschenkel (28, 29) auf. Die Blechprofile sind mit ihren Profilstegen (25) gegeneinander gesetzt und miteinander gegebenenfalls verschweißt. Der Polystyrolbeton (30) der Elemente facht die Felder zwischen benachbarten Querträgern (19), wie bei (31) in Fig. 1 dargestellt, aus und überdeckt die Flansche der U-Profile (17, 18) mit zwei dünnen Schichten (32, 33), so daß keines der Profile des Stahlskeletts sichtbar ist, weil die Schichten (32, 33) die Schichtseiten der Wandrahmen (34) abdecken, die in Fig. 4 bei (35 und 36) dargestellt sind.

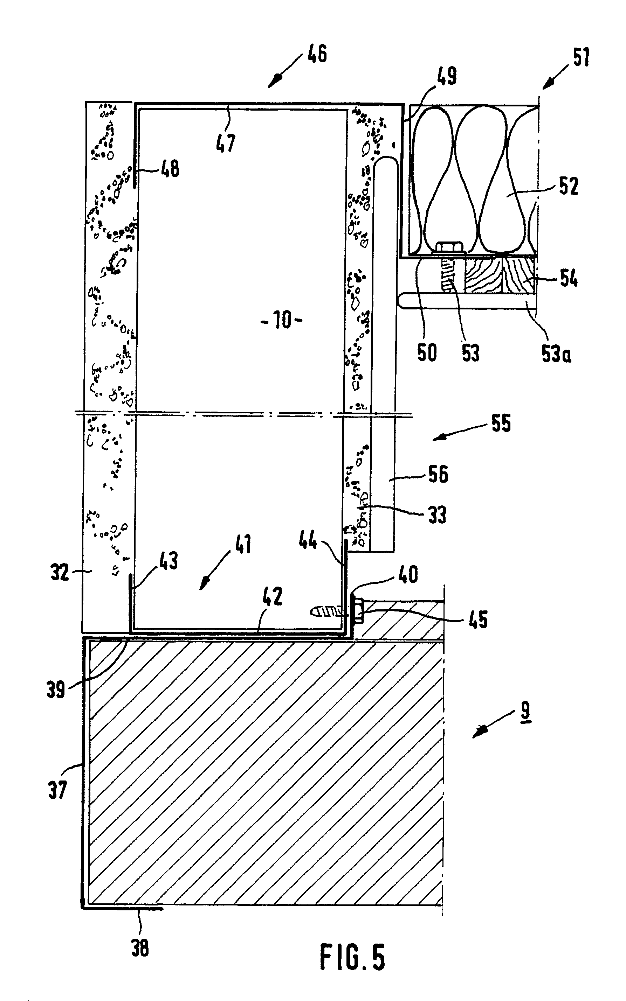

Fig. 5 zeigt in abgebrochener Darstellung einen senkrechten Schnitt durch eine der Raumzellen (2-5) nach Fig. 2. Die Wandscheibe (10), welche zwischen zwei benachbarten Stützen (23, 24) geschnitten ist, trägt außen die Polystyrolbetonschichten (32, 33) und läßt die genaue Form der U-Profile erkennen, welche die Längsrahmenglieder bilden. In der Bodenscheibe (9) hat das U-Profil einen senkrechten Steg (37), sowie nach innen gerichtete Flansche (38, 39), von denen der Unterflansch (38) kürzer als der Oberflansch (39) gehalten ist, der außerdem eine Aufkantung bei (40) aufweist. Auf dem Oberflansch (39) ruht das untere Rahmenlängsprofil (41) mit seinem Steg (42). Der kürzere U-Profilflansch (43) liegt außen, während der demgegenüber längere Pro filflansch (44) der Aufkantung (40) anliegt und mit dieser durch eine Verschraubung (45) dauerhaft verbunden ist. Das obere Rahmenlängsprofil (46) hat einen zum Steg (42) parallelen Steg (47) und einen zum Außenflansch (43) parallelen Außenflansch (48). Der Innenflansch (49) ist länger als der Außenflansch (48) und weist eine Aufkantung (50) auf, die senkrecht zur Rahmenebene und horizontal verläuft.

Die Abkantungen (50) der beiden längeren Seitenwände (10, 12) der Seitenscheiben dienen als Deckenanschlüsse. Die Decke besteht aus einzelnen Paneelen (51), die zur Deckenisolation mit Polyurethanhartschaum bei (52) versehen sind. Diese Paneele (51) sind mit Hilfe von Schrauben (53) auf den Abkantungen (50) befestigt.

In der fertigen Raumzelle, welche Wohnzwekken dient, ist die Deckenscheibe abgehängt. Dazu dienen Gipskartonplatten (53), welche mit Längsbzw. Querhölzern (54) verbunden sind, die ihrerseits an die aus den Paneelen (51) gebildete Decke angeschlossen sind. Ferner ist die Innenseite (55) jeder Wandscheibe mit einer Bauplatte (56) abgedeckt, wodurch sich glatte und tapezierbare Innenseiten in der Raumzelle ergeben.

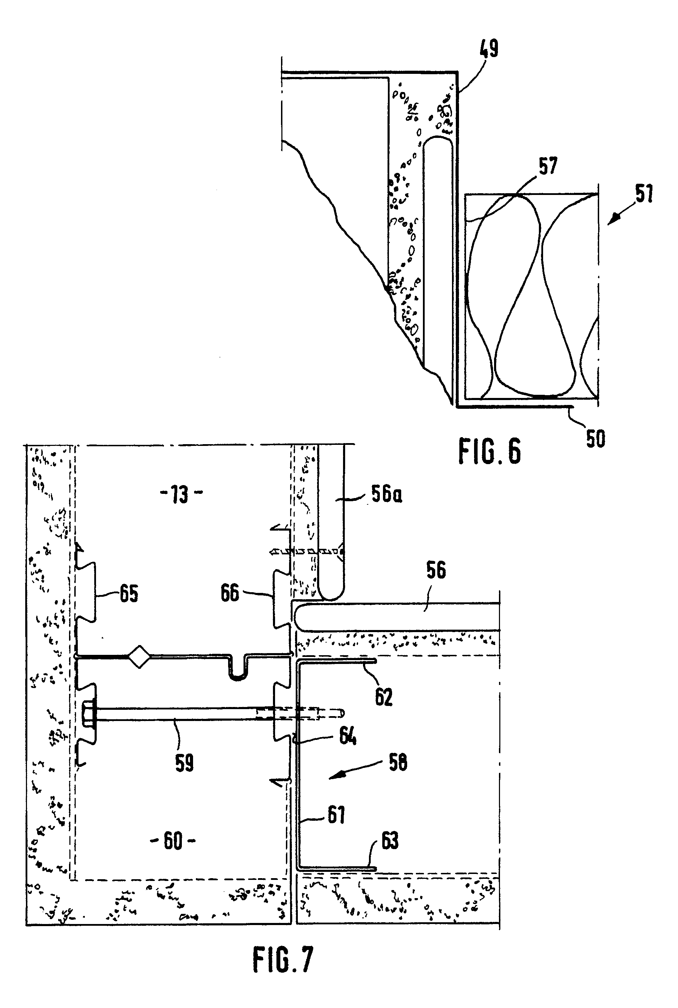

Die Fig. 6 läßt erkennen, daß die Abkantung (50) der beiden oberen Rahmenlängsglieder (46) der Seitenwände (10, 12) ein einheitliches Gefälle durch Verlängerung des inneren U-Profilflansches (49) ergeben. Infolgedessen liegen die Schmalseiten (57) der Paneele (51) auf einer einheitlichen Schräge, wodurch im Obergeschoß ein das Regenwasser ableitendes Gefälle erzeugt wird. Die Verwahrung der Decke ist jedoch in den Figuren nicht dargestellt und kann herkömmlich ausgeführt werden.

Die senkrechten kürzeren Rahmenglieder und ihre Profilierung sind aus der Fig. 7 ersichtlich, die einen Horizontalschnitt durch eine der Raumzellenecken wiedergibt. Danach haben diese Rahmenglieder ein symmetrisches U-Profil mit einem relativ langen Steg (61) und parallelen, sowie nach innen gerichteten Flanschen (62, 63), die wie alle anderen Profile in dem Blechstreifen durch Kaltverformung und Abkantung entstanden sind. Die Außenseiten (64) der Stege (61) liegen frei. Mit ihnen sind Hilfsprofile (65, 66) über Verbindungsschrauben (59) befestigt. Dadurch ergeben sich Eckteile (60), die von den Querwänden (12, 13) gebildet werden. Diese Querwände weisen ebenfalls auf ihrer Innenseiten Bauplatten (56a) als Wandverkleidung auf.

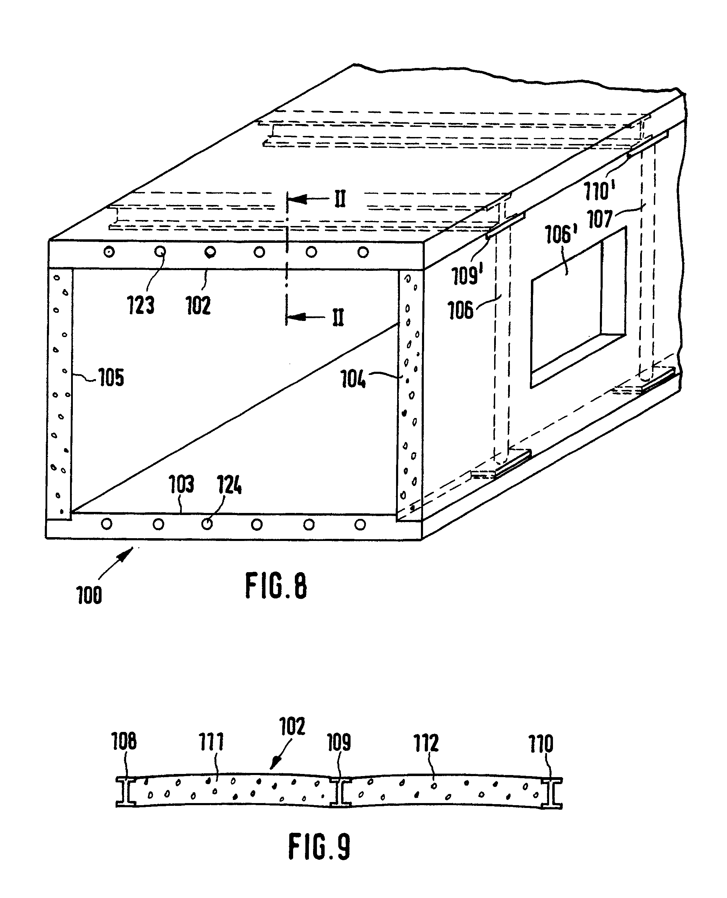

Die allgemein mit (100) bezeichnete Stahlbetonraumzelle in der abgeänderten Ausführungsform nach Fig. 8, welche eine perspektivische Darstellung gibt, hat eine durchgehende Deckenscheibe (102), deren Grundriß eine durchgehende Bodenscheibe (103) entspricht. Außerdem hat diese Raumzelle (100) Längswände (105), sowie Querwände, die in Fig. 1 nicht dargestellt sind. Wie jedoch am Beispiel der Längswand (104) bei (106') dargestellt ist, können einzelne oder alle Wände Durchbrüche aufweisen, die als Fenster- oder Türöffnungen nutzbar sind. Die beschriebenen Decken-, Boden- und Wandscheiben bestehen aus dem erfindungsgemäßen Polystyrolbeton. Dieser Beton läßt Trennschnitte zu, welche z.B. mit einer Säge ausgeführt werden können. Daher lassen sich die Öffnungen auch nachträglich vorsehen, wenn sie im Fertigteilewerk nicht abgeschalt werden sollen.

In der abgeänderten Ausführungsform sind die beschriebenen Scheiben mit Hilfe von Trägern bewehrt. Die Träger unterscheiden sich nach Material und Profil voneinander.

Die Längswände enthalten die Träger (107 und 108), wie sich aus der Fig. 9 ergibt, die einen Schnitt längs der Linie II-II der Fig. 8 darstellt. Diese Träger bilden Stützen, die gemäß dem dargestellten Ausführungsbeispiel aus verzinkten Rohren bestehen. Diese sind im Querschnitt der Großtafel untergebracht, welche die betreffenden Wandscheiben (4, 5) bildet. Sie verlaufen parallel zu den senkrechten Tafelseiten und reichen über die volle Höhe der Großtafel.

Die Träger (108-110) der Deckenscheibe (102) nach Fig. 2 sind I-Profile. Sie ruhen mit beiden Enden auf Kopfplatten (109' und 110') nach Fig. 9, die auf den Stützen bzw. Trägern (106, 107) der Wände (104, 105) angebracht sind. Sie verlaufen quer zur längeren Seite des Grundrisses der Stahlbetonraumzelle (100). Die Abstände zwischen den Trägern (108-110) sind mit Leichtbetongewölben (111, 112) ausgefacht. Auch die Träger (108-110) sind im Querschnitt der Deckenscheibe untergebracht.

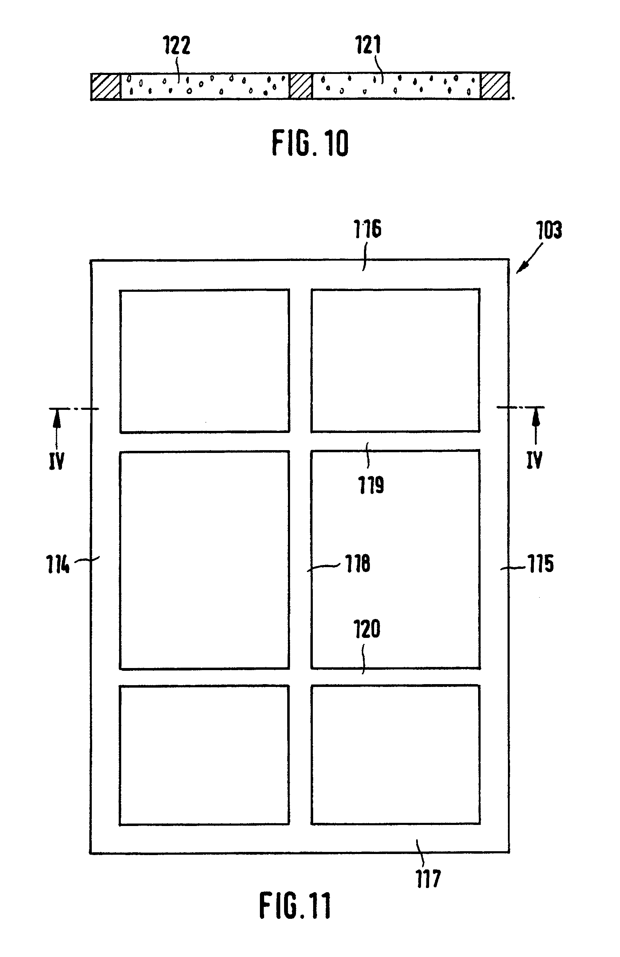

Die Bodenscheibe (103) ist in der Fig. 10, die einen Schnitt längs der Linie IV-IV der Fig. 11 darstellt und in der Fig. 11 wiedergegeben, welche die Bodenscheibe in Draufsicht zeigt. Sie besteht aus einem Rahmengeviert, welches dementsprechend parallele und längere Rahmenglieder (114 115), so wie die dazu senkrecht verlaufenden Rahmenglieder (116, 117) aufweist, die in den Ecken des Rahmengeviertes biegesteif mit den Trägern (114, 115) verbunden sind. Dabei ist das Rahmengeviert mit weiteren Rahmengliedern, nämlich einem Längsrahmenglied (118) und Querrahmengliedern (119, 120) ausgesteift. Der beschriebene Rahmen wird mit dem erfindungsgemäßen Polystyrolleichtbeton ausgefüllt, wodurch sich Ausfachungen ergeben, die in Fig. 10 beispielsweise mit (121 und 122) bezeichnet sind.

Im Gegensatz zu den Trägern (106, 107 bzw. 108, 110) sind die Rahmenglieder (114-120) Stahlbetonträger, wobei der ganze Rahmen monolithisch gefertigt ist.

Gemäß der Darstellung der Fig. 9 weist die Bodenscheibe parallele und zylindrische Aussparungen (124) auf, welche zur Ein- und Fortleitung eines Heizmediums dienen. Dadurch entsteht eine Fußbodenheizung in der Raumzelle (100). Auch die Deckenscheibe kann für einen darüberliegenden Raum mit derartigen Aussparungen, wie bei (123) gezeigt, versehen werden, so daß das Heizmedium auch diesen Raum beaufschlagt.

Die Decken-, Boden- und Wandscheiben (102-105) bilden Großtafeln, die in einer Schalung gefertigt werden. Die Schalung kann aus Stahl bestehen, ist aber vorzugsweise mit Stahlbetonplatten verwirklicht. Für den beschriebenen Leichtbeton kann Styroporabfall verwendet werden. Vorzugsweise liegt der Mischung jedoch das aufgeschäumte Polystyrol als solches zugrunde, welches in Kugelform vorliegt. Die Kugeln liegen nach einem bestimmten Körnungsspektrum mit einem maximalen Durchmesser von vorzugsweise 4 mm in trockener, lockerer Schüttung vor.

Der beschriebene Polystyrolbeton wird nach Fig. 12 in einem großformatigen Mauerstein (201) verwendet, der in perspektivischer Ansicht wiedergegeben ist. Die Innenfläche (202) und die Außenfläche (203) sind ebenso wie die senkrechten Fugenbegrenzungsflächen (204, 205) schalungsglatt. Diese Fugenflächen sind mit einer U-förmigen Aussparung (106) versehen. Dadurch wird die senkrechte Fuge verbreitert. Sie wird im allgemeinen nur vermörtelt, kann aber auch bewehrt werden. Die die horizontale Fuge begrenzenden Flächen (207 bzw. 208) sind eben, weisen also keine Aussparungen auf.

Die variable Decke wird nach der geforderten Festigkeit gewählt, die sich aus dem Polystyrolbeton ergibt, aus dem der großformatige Mauerstein (201) besteht. Die Rohdichteklasse entspricht 0,5. Die Festigkeitsklasse entspricht 0,5. Soweit nicht anders bestimmt, erfolgen die Herstellung und die Verwendung nach DIN 18153 für Hohlblocksteine aus Beton. Zeichnungen und Ausführungen erfolgen nach DIN 153 Teil I -Mauerwerk-.

Die im Zusammenhang mit dem Ausführungsbeispiel beschriebenen Gußtafeln können auch in der Großtafelbauweise für ganze Gebäude Verwendung finden.

## Ansprüche

1. Polystyrolbeton für Betonfertigteile, welche außer Zement und Zuschlag zur Gewichtsersparnis ein Granulat aus aufgeschäumtem Polystyrol enthält, dadurch gekennzeichnet, daß für den Zusammenhalt des erhärteten Baustoffes dem Styroporbeton in der Ausgangsmischung alkalische textile Fasern beigemischt sind.

2. Polystyrolbeton nach Anspruch 1, dadurch gekennzeichnet, daß ein zur Verbesserung des Fließverhaltens dienendes Agens in aufgeschäumtem Zustand beim Mischen des Polystyrolbetons zugesetzt ist.

3. Polystyrolbeton nach einem der Ansprüche 1 bis 2, dadurch gekennzeichnet, daß für eine Rohdichte von ca. 600 bis 1200 kg./m³ auf ca. 350 bis 430 kg Zement (PZ 55) ca. 200 bis 700 kg Reinsand, ca. 800 bis 500 l Granulat und ca. 140 bis 170 l Wasser, sowie ca. 600 g textile Fasern zugesetzt werden.

4. Polystyrolbeton nach einem der Ansprüche 1 bis 3, dadurch gekennzeichnet, daß der Mischung ca. 200 l Schaum zugesetzt werden.

5. Polystyrolbeton nach einem der Ansprüche 1 bis 4, dadurch gekennzeichnet, daß die textilen Fasern Polypropylenstapelfasern mit einer Faserstärke von ca. 20 bis 40 μ und Breiten von ca. 100 bis 300 μ mit Stapellängen von ca. 24 mm sind.

6. Verwendung des Styroporbetons in einer Raumzelle, insbesondere einem Wohncontainer aus einem Stahlskelett (1), welches einen Unterrahmen zur Bildung eines geschlossenen Bodens (9), eine Decke aus Paneelen (51) und Wände (10-13) mit senkrechten Stützen (23, 24) aufweist, die ausgefacht sind, dadurch gekennzeichnet, daß das Stahlskelett aus zu kalt geflanschten Profilen (23, 24) kalt umgeformten Blechstreifen besteht, welche biegesteife Einzelrahmen (1) für die Bodenscheibe (9) und die Wandscheiben (11-13) bilden, wobei in den Wandrahmen (34) die Stützen (23, 24) die kurzen Rahmenglieder (20, 21) und dazu parallele Querträger bilden, und daß die mit dem Polystyrolbeton (30) gebildeten Ausfachungen (31) die Sichtseiten (35, 36) der Rahmen (34) abdecken, die biegesteif miteinander verbunden sind.

7. Raumzelle nach Anspruch 6, dadurch gekennzeichnet, daß die geflanschten Blechprofile der Querträger (19) aus einem Paar von C-Profilen (23, 24), die gerade Flanschen (26, 27) und nach innen gerichtete Schenkel (28, 29) aufweisen und mit ihren Stegen (25) gegeneinander gesetzt und verbunden sind, bestehen und als Rahmenlängsglieder (17, 18) U-Profile dienen, wobei die Längsrahmenlängsglieder (51) der Bodenscheibe (9) Aufkantungen (45) und die oberen Längsrahmenlängsglieder (40) der Seitenscheiben der längeren Seitenwände (10, 12) Abkantungen (50) als Deckenanschlüsse aufweisen, die nach einem einheitlichen Gefälle im Raumzellendach verlaufen.

8. Raumzelle nach einem der Ansprüche 6 oder 7, dadurch gekennzeichnet, daß die Decke aus Paneelen (51) beteht, die mit einer Polyurethanharzschaumschicht (52) versehen sind und mit ihren Schmalseiten (57) auf den Abkantungen (50) ruhen, wobei im Raumzelleninneren die Decke mit Bauplatten (53a) abgehängt ist, die sich an Verkleidungsplatten (56) der Seitenwände (10, 13) anschließen.

9. Raumzelle insbesondere nach Anspruch 6, dadurch gekennzeichnet, daß die Deckenscheibe parallele Träger (108-110) aus I-Profil aufweist, zwischen denen der Polystyrolbeton (111, 112) Gewölbe bildet, wobei die Wandscheiben (104, 105) senkrechte Träger (109, 110) zur Unterstützung der Deckenträger (108-110) aufweisen, die Rohrprofilabschnitte sind.

10. Raumzelle nach Anspruch 9, dadurch gekennzeichnet, daß die biegesteife Rahmenkonstruktion (116-120) der Bodenscheibe (103) aus monolithischem Stahlbeton besteht.

11. Raumzelle nach einem der Ansprüche 9 oder 10, dadurch gekennzeichnet, daß die Wand- und/oder die Decken- oder die Bodenscheibe für eine Wand- und/oder Fußbodenheizung mit Aussparungen (122, 124) versehen ist.

12. Verwendung des Styroporbetons nach einem der Ansprüche 1 bis 5 in einem großformatigen Mauerstein aus konstruktivem Beton, dadurch gekennzeichnet, daß seine Höhe ca. 64 cm, seine Länge ca. 99 cm und seine Dicke je nach Festigkeit ca. 17,5 oder ca. 24,0 cm betragen.

13. Großformatiger Mauerstein nach Anspruch 12, gekennzeichnet durch Blähschiefer als Zuschlag, in dem die Körnung 4 bis 8 mm 128 kg und die Körnung 8 bis 16 mm ca. 399 kg in der Mischung ausmachen.

14. Großformatiger Mauerstein nach einem der Ansprüche 12 oder 13, gekennzeichnet durch einen Sandzuschlag in einer Menge von 240 kg unter Verminderung des Blähschieferanteils auf ca. 485 kg.

15. Großformatiger Mauerstein nach einem der Ansprüche 12 bis 14, gekennzeichnet durch eine Kornverteilung des Blähschieferanteils bei Sandzuschlag auf ca. 134 kg der Kornklasse 4 bis 8 mm und ca. 351 kg der Kornklasse 8 bis 16 mm.

16. Großformatiger Mauerstein nach einem der Ansprüche 12 bis 15, gekennzeichnet durch einen Leichtzuschlag aus Flugasche in einer Menge von ca. 700 kg.

17. Großformatiger Mauerstein nach einem der Ansprüche 12 bis 16, gekennzeichnet durch einen Leichtzuschlag aus Blähton in einer Größenordnung von ca. 345 kg.

18. Betonfertigteile, hergestellt unter Verwendung des Polystyrolbetons nach einem der Ansprüche 1 bis 5.

FIG.1

FIG.2

FIG.3

FIG.4

FIG.5

FIG.6

FIG.7

**FIG.8**

**FIG.9**

FIG. 10

FIG.11

FIG.12